# FASCICULE DE BREVET EUROPEEN

(11) **EP 2 110 297 B1**
(45) Date de publication et mention de la délivrance du brevet: **22.12.2010**
(21) Numéro de dépôt: 08291183.5
(22) Date de dépôt: 15.12.2008
(51) Int. Cl.: B62D 65/02, B62D 65/18, B66F 7/22

(54) **Procédé de retournement d'une structure et outillage associé à un tel procédé**
Strukturschwenk-Verfahren und -Vorrichtung
Structure pivoting method and associated device

(30) Priorité: 14.04.2008 FR 0802056
(43) Date de publication de la demande: 21.10.2009
(73) Titulaire: NEXTER Systems, 42328 Roanne Cedex (FR)
(72) Inventeur: Charlier, Dominique, 18023 Bourges Cedex (FR); Laurent, Henri, 18023 Bourges Cedex (FR); Viganne, Séphane, 18023 Bourges Cedex (FR)
(74) Mandataire: Célanie, Christian

(56) Documents cités:
- EP-A- 0 245 666
- GB-A- 1 101 089
- US-A- 4 134 501
- US-A1- 2002 069 531

## Description

Le domaine technique de l'invention est celui des procédés permettant le retournement d'une structure et en particulier d'une caisse d'un véhicule.

Il est connu de retourner tout ou partie d'un véhicule pour permettre par exemple un montage plus aisé d'équipements au niveau d'une face inférieure de ce dernier. On peut ainsi réaliser le montage des moyens de mobilité du véhicule, tels que les roues, les essieux ou les chenilles.

Le brevet US6615478, qui est pris à base du préambule des revendications 1 et 4 de la demande, décrit ainsi un procédé d'assemblage d'un véhicule lourd (tel un camion), procédé dans lequel un outillage particulier permet de faire pivoter le châssis pour accéder à sa face inférieure. Cet outillage comprend des mâchoires solidaires d'un bâti qui est monté pivotant autour d'un axe horizontal. L'axe de ce bâti est parallèle à l'axe longitudinal du véhicule (ou de son châssis).

Ce procédé et cet outillage sont bien adaptés au retournement de châssis relativement légers (masse inférieure à 1000 kg). Ils sont par contre inadaptés pour permettre le retournement d'une structure telle un véhicule ou une caisse de véhicule très lourde (masse supérieure à 5 tonnes), comme c'est par exemple le cas pour un véhicule blindé.

En effet un outillage tel que décrit par US6615478 qui serait dimensionné pour retourner une telle masse n'est pas envisageable en raison des porte-à-faux importants et des contraintes mécaniques qui en résulteraient.

Il est cependant nécessaire de permettre un montage simple des équipements au niveau de la face inférieure du véhicule et il est donc nécessaire de prévoir des moyens permettant d'assurer le retournement du véhicule après ce montage.

La seule solution envisagée à ce jour est la mise en oeuvre de moyens de manutention lourds qui sont adaptés à la masse à retourner, par exemple des camions grue.

Cependant ces moyens sont coûteux, encombrants et longs à mettre en oeuvre. Ils imposent la mise en place d'un élinguage complexe et les risques de chutes ou de fausses manoeuvres sont également importants.

C'est le but de l'invention que de proposer un procédé de retournement d'une structure telle un véhicule ainsi que l'outillage associé, procédé peu coûteux et de mise en oeuvre simple, rapide et sûre.

Ainsi l'invention a pour objet un procédé de retournement d'une structure, par exemple une caisse d'un véhicule après une étape de montage d'équipements, notamment de moyens de mobilité, au niveau d'une face inférieure de la dite structure, procédé caractérisé en ce que l'on fait pivoter la structure autour d'un axe instantané de pivotement qui est perpendiculaire à un axe longitudinal de la structure, axe de pivotement qui est localisé au voisinage d'une première extrémité de la structure, un moyen de manoeuvre étant positionné au niveau de l'autre extrémité de la structure pour commander ce pivotement.

Le moyen de manoeuvre pourra être constitué par au moins une élingue entraînée par un palan.

Selon un mode de réalisation de l'invention, on fixe au niveau de la première extrémité de la structure un berceau comportant un profil destiné à venir en contact avec le sol pour former une surface de roulement.

L'invention a également pour objet un outillage de retournement pour une structure, outillage permettant la mise en oeuvre de ce procédé.

Cet outillage est caractérisé en ce qu'il comprend un berceau qui est fixé au niveau d'une première extrémité de la structure, berceau qui comporte un profil destiné à venir en contact avec le sol pour former une surface de roulement.

Avantageusement le berceau peut comporter au moins une barre au niveau d'une de ses extrémités, barre qui est destinée à venir en contact avec le sol au moment ou la face inférieure de la structure est sensiblement verticale, et qui est destinée à coopérer avec au moins une butée fixée au sol pour provoquer le basculement de la structure.

L'outillage de retournement comprendra aussi, d'une façon préférée, au moins deux butées fixées au sol et permettant de délimiter la zone dans laquelle se positionne la barre au moment ou la face inférieure de la structure est sensiblement verticale.

Avantageusement le berceau aura des dimensions telles que les moyens de mobilité de la structure ne viennent en contact avec le sol que lorsque cette structure a sa face inférieure proche de l'horizontale.

L'invention sera mieux comprise à la lecture de la description qui va suivre d'un mode particulier de réalisation, description faite en référence aux dessins annexés et dans lesquels :
- la figure 1 montre schématiquement un véhicule portant au niveau d'une de ses extrémités un berceau permettant de maîtriser le retournement,
- la figure 2 est une vue du berceau seul suivant la direction d'observation repérée F à la figure 1,
- les figures 3a à 3h sont huit figures schématisant différentes étapes du procédé de retournement selon l'invention.

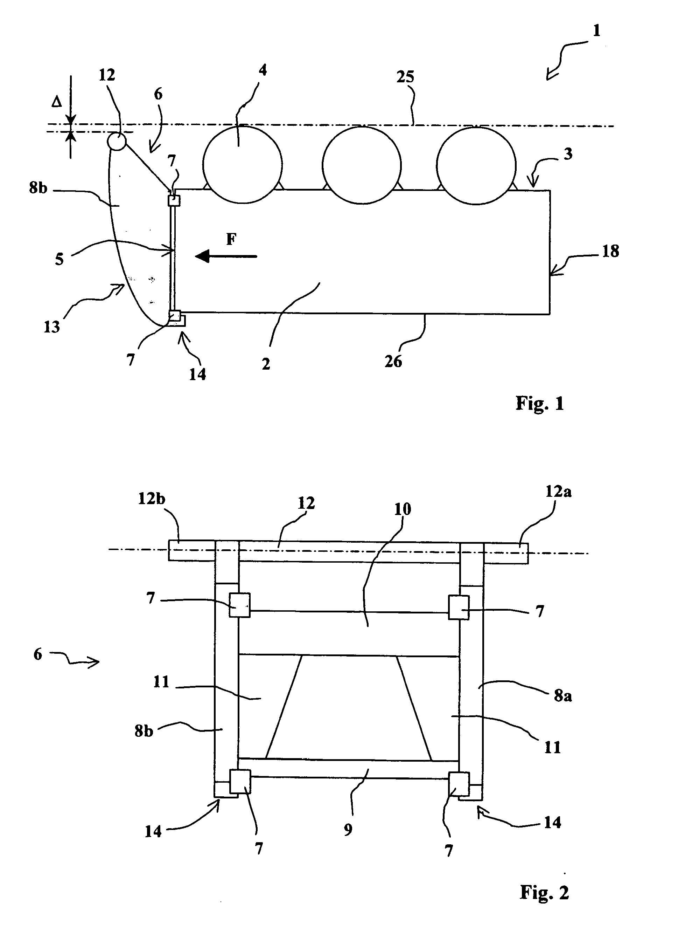

On a représenté de façon schématique à la figure 1 un véhicule 1 qui est un véhicule blindé à roues. Ce véhicule comprend une caisse 2 qui porte au niveau d'une face inférieure 3 trois paires de roues 4 portées par des essieux (non visibles sur la figure). De nombreux autres équipements sont fixés au niveau de cette face inférieure 3 : transmissions mécaniques, essieux, trains de roulement, suspensions. Ces équipements ne sont pas représentés ici car ils ne font pas l'objet de la présente invention et leur représentation n'apporterait rien à la compréhension de l'invention elle-même.

Pour faciliter le montage de tous ces équipements qui peuvent être relativement lourds, la caisse 2 est posée à l'envers sur le sol, ce qui facilite le positionnement et la fixation des équipements sur la face inférieure 3.

Une fois ces équipements fixés, il va être nécessaire de retourner la caisse du véhicule pour le positionner avec ses roues sur le sol.

Conformément à l'invention on va pour cela fixer au niveau d'une première extrémité 5 du véhicule 1 (par exemple au niveau de l'extrémité arrière) un outillage de retournement qui comprend un berceau 6.

Ce berceau est fixé au véhicule 1 par un moyen de solidarisation approprié 7, par exemple des pattes soudées au berceau 6 et comportant des boulons pouvant coopérer avec des pattes complémentaires solidaires de l'extrémité 5 du véhicule 1.

La figure 2 montre le berceau 6 visualisé selon la direction F (figure 1). Ce berceau est une structure mécanosoudée qui comporte deux joues latérales 8a, 8b qui sont reliées l'une à l'autre par des entretoises 9 et 10. Des tôles raidisseuses 11 sont également soudées entre les entretoises 9 et 10 et les joues 8a, 8b.

Par ailleurs le berceau 6 comporte une barre cylindrique 12 au niveau d'une de ses extrémités. Cette barre 12 a des extrémités 12a et 12b qui dépassent du berceau de part et d'autre de chaque joue 8a, 8b.

On voit sur la figure 1 que les joues 8a,8b du berceau 6 comportent un profil externe convexe 13 qui est destiné à venir en contact avec le sol et qui forme une surface de roulement de la joue par rapport au sol. Ce profil convexe s'étend de la barre 12 jusqu'à l'autre extrémité de la joue 8a, 8b. Cette autre extrémité de chaque joue comporte un bec 14 sur lequel est positionnée une patte de fixation 7.

Ce bec 14 permet de former une surface d'appui qui protège le rebord de la caisse 2 du véhicule. Ce bec 14 vient en contact avec le sol au début du mouvement de retournement et il évite de détériorer la caisse lors de cette étape.

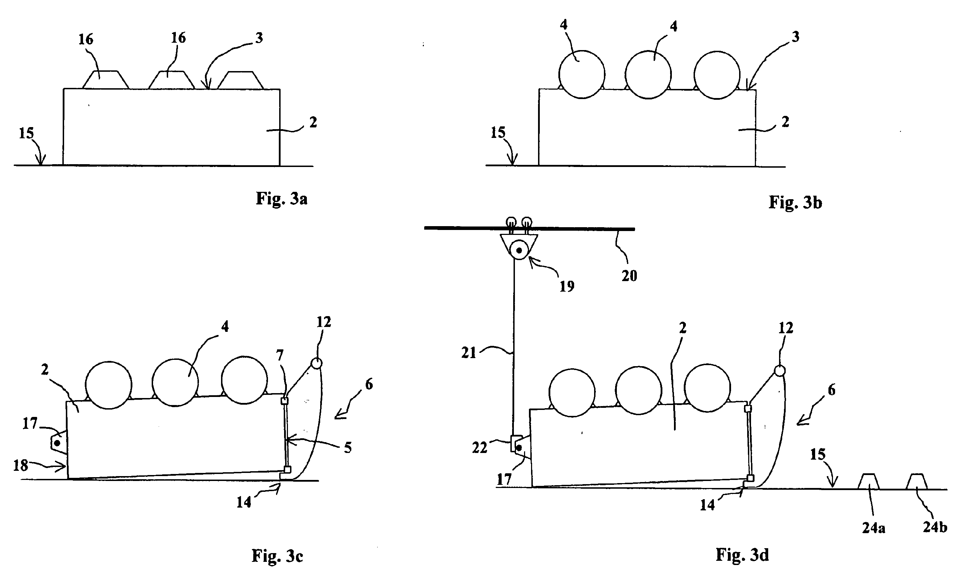

Le procédé selon l'invention va maintenant être décrit en référence aux figures 3a à 3h.

A la figure 3a la caisse 2 du véhicule est représentée posée à l'envers sur le sol 15. Cette caisse est nue et sa face inférieure 3 porte ici des plots 16 usinés destinés à recevoir les essieux.

A la figure 3b on a représenté la même caisse 2 sur laquelle ont été mis en place les essieux et les roues 4 (ainsi que les autres équipements, non représentés ici).

A la figure 3c on a représenté la caisse 2 sur laquelle on a fixé le berceau 6 (au niveau de sa première extrémité 5). On a représenté aussi sur cette figure 3c un moyen d'attache 17 qui est solidaire de l'autre extrémité 18 de la caisse du véhicule. On a schématisé ici ce moyen d'attache sous la forme d'une chappe. Il pourra selon la géométrie du véhicule être constitué par des pattes d'attache fixées à demeure à la caisse 2 et sur lesquelles il est possible de positionner des élingues de traction. Il pourra aussi être constitué par un outillage spécifique (par exemple une barre de fixation) qui sera fixé au véhicule par des pattes d'attache appropriées.

On remarque sur la figure 3c que la caisse 2 du véhicule est légèrement inclinée, les becs 14 du berceau 6 étant en appui sur le sol. Avant de fixer le berceau 6, on a donc légèrement soulevé la caisse 2 à l'aide d'un moyen de levage, tel un palan.

La figure 3d montre cette même caisse 2 au tout début de la phase de retournement.

On a positionné un palan (ou un pont roulant) 19 au-dessus de la caisse 2. La puissance du palan sera bien entendu adaptée à la masse du véhicule à retourner. Ce palan est monté roulant sur des rails 20 fixés au plafond de l'atelier. I1 commande l'enroulement d'une élingue 21 qui se termine par un crochet 22 qui est fixé au moyen d'attache 17. Cette élingue 21 entraînée par le palan 19 constitue un moyen de manoeuvre de la caisse 2.

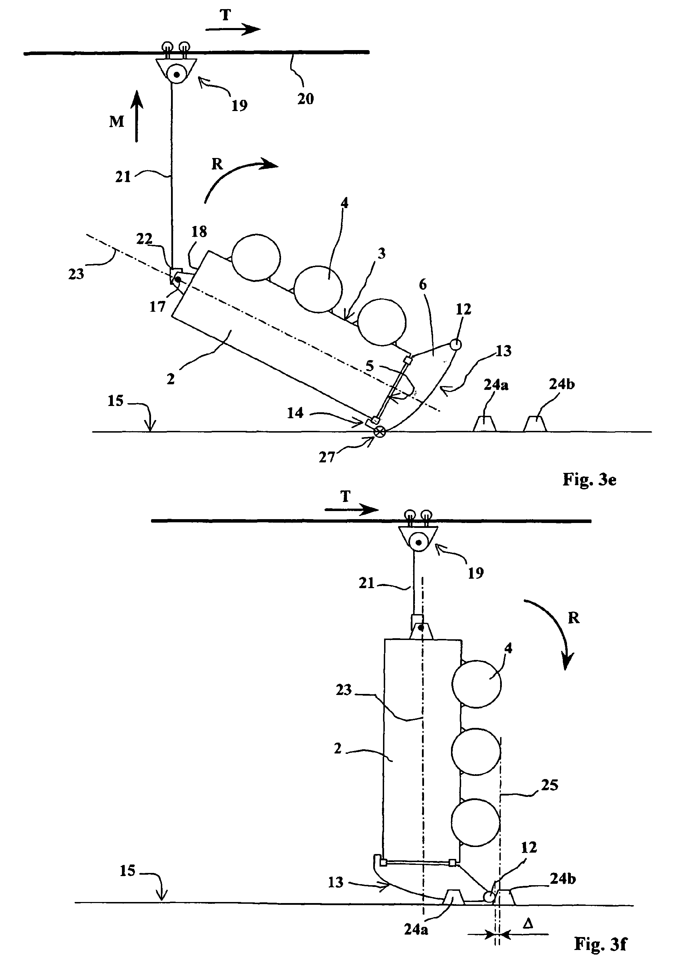

La figure 3e montre le début de la phase de retournement. Le palan 19 se déplace (flèche T) tandis que le palan 19 remonte l'élingue 21 (flèche M). La caisse 2 du véhicule pivote (flèche R), le berceau 6 pouvant rouler sur le sol 15 grâce à son profil 13 qui constitue une surface de roulement. On remarque que la caisse 2 n'est pas en contact direct avec le sol car elle est protégée par le berceau 6. Elle ne se trouve donc pas détériorée lors de la manoeuvre malgré sa masse importante.

Le pivotement de la caisse du véhicule se fait autour d'un axe instantané de pivotement 27 qui est perpendiculaire à un axe longitudinal 23 du véhicule. L'axe de pivotement 27 n'a pas une position fixe au cours du mouvement de retournement. Il correspond à tout instant à une ligne virtuelle de contact du berceau 6 avec le sol 15. Il est cependant toujours situé au niveau du sol 15 et localisé au voisinage de la première extrémité 5 du véhicule, tandis que le moyen de manoeuvre 21,22,19 est fixé au niveau de l'autre extrémité 18 du véhicule.

La caisse 2 du véhicule roule donc sur le profil 13 du berceau. On remarque que l'on a positionné sur le sol 15 des butées 24a et 24b qui sont fixées au sol 15. Il y a concrètement deux butées avant 24b disposées chacune de façon à venir en contact avec une extrémité 12a,12b différente de la barre 12. Il y a aussi deux butées arrières 24a, symétriques des précédentes par rapport à un plan vertical. Ainsi les butées se trouveront, lors du mouvement de la caisse, de part et d'autre des joues 8a, 8b du berceau 6 qui ne toucheront donc pas les butées.

Ces butées 24a,24b sont positionnées de telle sorte qu'à l'issue du mouvement de roulement du berceau 6, la barre 12 solidaire du berceau vienne se positionner entre les butées.

La figure 3f montre la position de la caisse 2 lorsque cette dernière se trouve avec son axe longitudinal 23 pratiquement vertical. Le palan 19 soulève alors légèrement la caisse 2 qui pendant peu de temps n'est plus en contact avec le sol (soulèvement de l'ordre du centimètre). L'élingue 21 a alors sa longueur minimale et le palan 19 poursuit son mouvement de translation (flèche T), la caisse restant dans sa position d'équilibre suspendue, avec son centre de gravité à la verticale du moyen d'attache (ou point d'accrochage) 17.

Les butées 24a et 24b permettent de maîtriser la localisation de la barre 12. Elles délimitent la zone dans laquelle est positionnée la barre ce qui sécurise l'opération de retournement.

La barre 12 n'est plus en contact avec le sol mais comme suite à la translation T du palan 19, ses extrémités 12a,12b arrivent en contact contre les butées avant 24b. Il en résulte un début de basculement de la caisse 2 suivant la flèche R. Le centre de gravité de la caisse passe de l'autre côté du plan vertical qui le contenait lors du soulèvement et la caisse 2, stoppée par les butées avant 24b, va avoir naturellement tendance à poursuivre son pivotement suivant la flèche R, pivotement qui sera contrôlé à l'aide du palan 19.

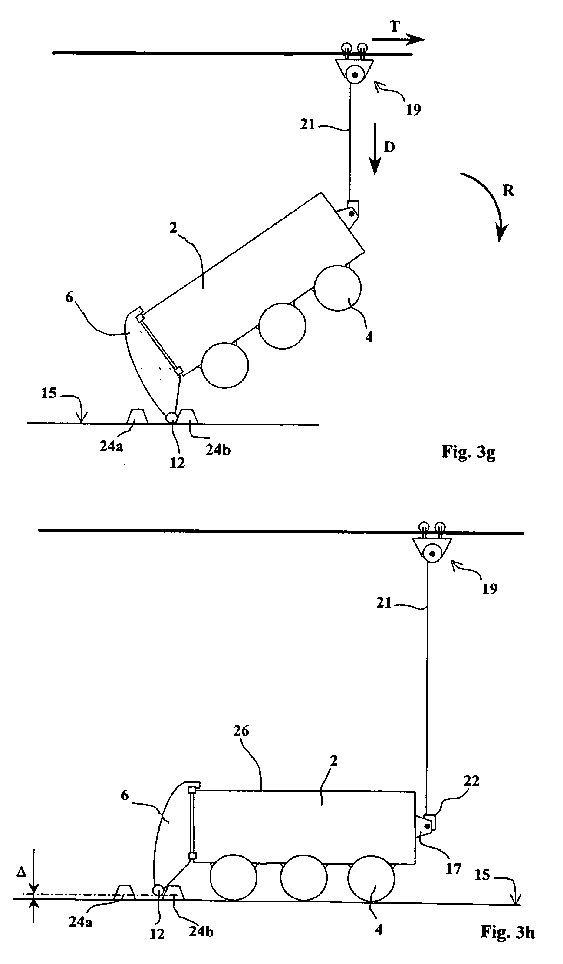

La figure 3g montre ainsi la poursuite du mouvement de retournement de la caisse du véhicule. Le palan 19 continue à se translater (flèche T) tandis que l'élingue 21 est allongée (flèche D). La caisse 2 du véhicule continue à pivoter (flèche R) dans le sens des aiguilles d'une montre. La barre 12 est en appui contre les butées avant 24b.

La figure 3h montre l'étape finale du retournement. La caisse 2 est positionnée sur le sol 15 sur ses roues 4.

On remarque sur les figures 3f et 3h que le berceau 6 est dimensionné de telle sorte que la barre 12 se trouve décalée d'une distance Δ par rapport au plan 25 qui est le plan de roulement des roues 4. Ce décalage est tel que lorsque les roues 4 viendront en contact avec le sol (figure 3h) la barre 12 ne touchera pas le sol. Cette distance Δ est de l'ordre d'une dizaine de centimètres. Elle permet de maîtriser pendant le mouvement de pivotement l'instant au cours duquel les roues 4 arriveront effectivement en contact avec le sol.

Ainsi les moyens de mobilité (roues 4) ne constituent jamais un axe de pivotement de la caisse 2 pendant la manoeuvre de retournement. On limite donc les contraintes mécaniques qui seraient subies par un essieu. C'est uniquement le berceau 6 qui reçoit tous les efforts et contraintes liées au mouvement de retournement.

Après cette dernière étape (figure 3h). Il suffit de détacher l'élingue 21 et de démonter le berceau 6 et éventuellement le moyen d'attache 17.

Le montage du véhicule 1 peut alors se poursuivre avec les organes fixés sur la face supérieure 26 de la caisse ainsi que les équipements intérieurs.

L'invention peut être adaptée au retournement de tous types de véhicules ou bien de structures lourdes même non roulantes.

Il suffit d'adapter les formes du berceau 6 et des moyens d'attache 17 à la forme de la structure considérée. On pourra notamment mettre en oeuvre l'invention pour retourner des véhicules blindés chenillés.

## Revendications

1. Procédé de retournement d'une structure (2), par exemple une caisse d'un véhicule (1) après une étape de montage d'équipements, notamment de moyens de mobilité, au niveau d'une face inférieure (3) de la dite structure, procédé **caractérisé en ce que** l'on fait pivoter la structure (2) autour d'un axe (27) instantané de pivotement qui est perpendiculaire à un axe longitudinal (23) de la structure, axe de pivotement qui est localisé au voisinage d'une première extrémité (5) de la structure, un moyen de manoeuvre (21,22) étant positionné au niveau de l'autre extrémité (18) de la structure pour commander ce pivotement.

2. Procédé de retournement selon la revendication 1, procédé **caractérisé en ce que** le moyen de manoeuvre est constitué par au moins une élingue (21) entraînée par un palan (19).

3. Procédé de retournement selon une des revendications 1 ou 2, procédé **caractérisé en ce qu'**on fixe au niveau de la première extrémité (5) de la structure (2) un berceau (6) comportant un profil (13) destiné à venir en contact avec le sol pour former une surface de roulement.

4. Outillage de retournement pour une structure, outillage permettant la mise en oeuvre du procédé selon la revendication 3, outillage **caractérisé en ce qu'**il comprend un berceau (6) qui est fixé au niveau d'une première extrémité (5) de la structure (2), berceau qui comporte un profil (13) destiné à venir en contact avec le sol pour former une surface de roulement.

5. Outillage de retournement selon la revendication 4, **caractérisé en ce que** le berceau (6) comporte au moins une barre (12) au niveau d'une de ses extrémités, barre qui est destinée à venir en contact avec le sol au moment ou la face inférieure de la structure (2) est sensiblement verticale, et qui est destinée à coopérer avec au moins une butée (24a,24b) fixée au sol pour provoquer le basculement de la structure (2) .

6. Outillage de retournement selon la revendication 5, **caractérisé en ce qu'**il comporte au moins deux butées (24a,24b) fixées au sol et permettant de délimiter la zone dans laquelle se positionne la barre (12) au moment ou la face inférieure (3) de la structure (2) est sensiblement verticale.

7. Outillage de retournement selon une des revendications 4 à 6, **caractérisé en ce que** le berceau (6) a des dimensions telles que les moyens de mobilité (4) de la structure (2) ne viennent en contact avec le sol que lorsque cette structure a sa face inférieure (3) proche de l'horizontale.

## Claims

1. A process to invert a structure (2), for example a vehicle (1) body after an equipment mounting phase, namely of mobility means, on the underside (3) of said structure, process **characterised in that** the structure (2) is made to swivel around an instantaneous axis of rotation (27) which is perpendicular to the longitudinal axis (23) of the structure, such axis of rotation being located in the vicinity of a first end (5) of the structure, manoeuvring means (21, 22) being positioned at the other end (18) of the structure to control this swiveling.

2. An inversion process according to Claim 1, **characterised in that** the manoeuvring means are constituted by at least one sling (21) driven by a hoist (19).

3. An inversion process according to one of Claims 1 or 2, **characterised in that** a rocker (6) is attached to the first end (5) of the structure (2), such rocker incorporating a profile (13) intended to come into contact with the ground to form a rolling surface.

4. Tooling to invert a structure, such tooling enabling the process according to Claim 3 to be implemented, tooling **characterised in that** it comprises a rocker (6) that is attached at a first end (5) of the structure (2), such rocker incorporating a profile (13) intended to come into contact with the ground to form a rolling surface.

5. Inversion tooling according to Claim 4, **characterised in that** the rocker (6) incorporates at least one bar (12) at one of its ends, such bar being intended to come into contact with the ground when the underside of the structure (2) is substantially vertical, and which is intended to cooperate with at least one limit stop (24a, 24b) fixed to the ground to cause the structure (2) to tip over.

6. Inversion tooling according to Claim 5, **characterised in that** it comprises at least two limit stops (24a, 24b) fixed to the ground and delimiting the zone in which the bar (12) is positioned when the underside (3) of the structure (2) is substantially vertical.

7. Inversion tooling according to one of Claims 4 to 6, **characterised in that** the rocker (6) is of such dimensions that the mobility means (4) of the structure (2) only come into contact with the ground when this structure has its underside (3) close to horizontal.

## Patentansprüche

1. Verfahren zum Umdrehen einer Struktur (2), zum Beispiel einer Karosserie eines Fahrzeugs (1) nach einem Schritt der Montage von Ausrüstungen, insbesondere von Bewegungsmitteln, im Bereich einer unteren Fläche (3) der genannten Struktur, wobei das Verfahren **dadurch gekennzeichnet ist, dass** man die Struktur (2) um eine momentane Drehachse (27) sich drehen lässt, die senkrecht zu einer Längsachse (23) der Struktur steht, wobei sich die Drehachse in der Nähe eines ersten Endes (5) der Struktur befindet, wobei ein Betätigungsmittel (21, 22) im Bereich des anderen Endes (18) der Struktur angeordnet ist, um diese Drehung zu bewirken.

2. Verfahren zum Umdrehen nach Anspruch 1, wobei das Verfahren **dadurch gekennzeichnet ist, dass** das Betätigungsmittel von wenigstens einem Seilgeschirr (21) gebildet wird, das von einem Flaschenzug (19) angetrieben wird.

3. Verfahren zum Umdrehen nach einem der Ansprüche 1 oder 2, wobei das Verfahren **dadurch gekennzeichnet ist, dass** im Bereich des ersten Endes (5) der Struktur (2) eine Wiege (6) befestigt wird, die ein Profil (13) umfasst, das dafür vorgesehen ist, mit dem Boden in Berührung zu kommen, um eine Abrollfläche zu bilden.

4. Arbeitsgerät zum Umdrehen für eine Struktur, wobei das Arbeitsgerät es ermöglicht, das Verfahren nach Anspruch 3 durchzuführen, wobei das Arbeitsgerät **dadurch gekennzeichnet ist, dass** es eine Wiege (6) umfasst, die im Bereich eines ersten Endes (5) der Struktur (2) befestigt ist, wobei die Wiege ein Profil (13) umfasst, das dafür vorgesehen ist, mit dem Boden in Berührung zu kommen, um eine Abrollfläche zu bilden.

5. Arbeitsgerät nach Anspruch 4, **dadurch gekennzeichnet, dass** die Wiege (6) wenigstens eine Stange (12) im Bereich einer ihrer Enden umfasst, wobei die Stange dafür vorgesehen ist, mit dem Boden in dem Moment in Berührung zu kommen, in dem die untere Fläche der Struktur (2) im wesentlichen senkrecht steht, und die dafür vorgesehen ist, mit wenigstens einem am Boden befestigten Anschlag (24a, 24b) zusammen zu wirken, um das Kippen der Struktur (2) zu bewirken.

6. Arbeitsgerät zum Umdrehen nach Anspruch 5, **dadurch gekennzeichnet, dass** es wenigstens zwei Anschläge (24a, 24b) umfasst, die am Boden befestigt sind und die es ermöglichen, die Zone, in der sich die Stange (12) in dem Moment befindet, in dem die untere Fläche (3) der Struktur (2) im wesentlichen senkrecht steht, zu begrenzen.

7. Arbeitsgerät zum Umdrehen nach einem der Ansprüche 4 bis 6, **dadurch gekennzeichnet, dass** die Wiege (6) derartige Abmessungen aufweist, dass die Bewegungsmittel (4) der Struktur (2) nur mit dem Boden in Berührung kommen, wenn die untere Fläche (3) dieser Struktur nahe zur Horizontalen liegt.
